# EUROPEAN PATENT SPECIFICATION

(11) **EP 2 476 354 B1**
(45) Date of publication and mention of the grant of the patent: **01.05.2013**
(21) Application number: 12150829.5
(22) Date of filing: 11.01.2012
(51) Int. Cl.: A47J 47/00

(54) **Chopping board**
Schneidebrett
Planche de découpe

(30) Priority: 14.01.2011 IT PD20110010
(43) Date of publication of application: 18.07.2012
(73) Proprietor: Nuova R2S S.p.A., 25124 Brescia (IT)
(72) Inventor: Vivenzi, Silverio, 25065 Lumezzane (BS) (IT)
(74) Representative: Locas, Davide

(56) References cited:
- WO-A2-2008/024307
- DE-U1- 29 819 376
- US-A1- 2006 085 989
- US-A1- 2009 033 012

## Description

The present invention relates to a chopping board or similar support device suitable for being used to receive foods to be chopped.

In cooking, in the preparation of some types of foods there are used chopping boards or similar support elements, on which there is supported a food to be chopped such as, for example, the one described in patent application US 2009/033012.

The use of chopping boards allows the provision of a hygiene barrier between the food being prepared and the work surfaces, preservation of the edge of the blades of the knives used, damping of the chopping blows and prevention of damage and/or scratches to the work surfaces.

Furthermore, there is the widespread custom of serving at table some foods, such as, for example, cooked meats, cheeses or the like, by positioning them on chopping boards which are carried to table in such a manner that the guests can directly chop desired portions of the foods if, and only when, they effectively wish to consume them.

The chopping utensil suitable for the food or foods present on the chopping board is supported on the chopping board itself and carried to table. Therefore, there is a risk that the utensil may fall from the plane of the chopping board during the journey as far as the table or also when the chopping board is passed between the various guests.

That problem is made worse if there is provision for the use of different chopping utensils, for example, if different foods are being served on the chopping board.

In order to solve that problem there are known chopping boards which are provided with an attachment which is secured perpendicularly with respect to the chopping plane of the chopping board and which is provided with a magnet in order to fix the chopping utensils in position.

In that manner, during the transport of the chopping board, the chopping utensils are prevented from falling from the chopping board itself.

The magnet is provided on the wall of the attachment directed towards the chopping board in such a manner that the utensils are readily available to the user.

However, those chopping boards have a considerable spatial requirement, occupying a great deal of space when they are put away after use.

The problem addressed by the present invention is to provide a chopping board which is structurally and functionally configured to overcome the limitations set out above with reference to the cited prior art.

Within the scope of that problem, an object of the invention is to construct a chopping board which is provided with a fixing attachment for fixing chopping utensils and which has a limited spatial requirement at the same time.

This problem is solved and those objects are achieved by the present invention by means of a chopping board constructed in accordance with the appended claims.

The features and advantages of the invention will be better appreciated from the detailed description of a preferred embodiment thereof illustrated by way of non-limiting example with reference to the appended drawings, in which:
- Figure 1 is a perspective view of a chopping board constructed according to the present invention in a first operating configuration,
- Figure 1a is a partially sectioned rear view of the device of Figure 1 to an enlarged scale;
- Figure 2 is a perspective view of a chopping board constructed according to the present invention in a second operating configuration,
- Figure 2a is a partially sectioned rear view of the device of Figure 2 to an enlarged scale.

The Figures show a chopping board 1 comprising a body which defines a working plane 1a which is intended to receive a desired food to be served with it and/or to be chopped on the chopping board 1.

In the version shown, the body of the chopping board 1 is formed so as to define a working plane 1a of rectangular shape but other shapes may be provided, for example, circular chopping boards.

The working plane 1a comprises a pair of longer sides 1b having a length L and a pair of shorter sides 1c having a length I.

The chopping board 1 is provided at a peripheral portion 2 thereof with two edge elements 3a, 3b which have a thickness greater than the body of the chopping board 1 and which extend in a direction perpendicular to the working plane 1a and which project with respect thereto so as to constitute raised edge portions of the chopping board 1.

Each edge element 3a, 3b comprises an external base 30 which is arranged at a distance d1 from the chopping plane 1a of the chopping board 1 and a side face 31 which is arranged edge to edge with an external side edge of the chopping board 1.

The edge portions 3a, 3b can be integrally constructed with the body of the chopping board 1 or may be constructed separately and subsequently adhesively bonded, or fixed in another similar manner, to the body of the chopping board 1.

In the version shown, the two edge elements are provided at the two corner regions of one of the shorter sides 1c of the working plane 1a.

The chopping board 1 further comprises a fixing attachment 5 which is of L-like shape with a side wall 5a and a base 5b which projects with respect to the side wall 5a towards the chopping plane 1a.

The attachment 5 is connected in the region of the base 5b thereof to the edge elements 3a, 3b of the chopping board 1.

The side wall 5a is provided with an internal face 50 which is intended to be directed during use towards the chopping plane 1a of the chopping board 1 and an opposite external face 51.

The attachment 5 has a width L1 equal to the distance between the two edge elements 3a, 3b, the base 5b projects with respect to the side wall 5a at the side of the internal face 50 thereof by a portion d3 of approximately 1 cm.

The attachment 5 comprises fixing means 6 in order to fix one or more utensils 7, which are intended to be used to chop and/or serve the food present on the chopping board 1, to the attachment 5 in a stable manner. The fixing means 6 are provided on the internal face 50 of the attachment 5. Each utensil 7 comprises a handle 8 which is intended to be gripped by a user and which is composed of wood or another suitable material and an active portion 9 which is intended to come into contact with the food present on the chopping board 1 in order to chop it, portion it and/or serve it. The active portion 9 is generally constructed from steel.

In the version shown, the fixing means 6 comprise a magnet 60 which is provided on the internal face 50 and which extends over the width L1 of the attachment 5. The steel active portion 9 of the utensils 7 is maintained in a stable manner by the magnetic force developed by the magnet 60 on the magnet 60 itself.

The magnet 60 is positioned at a given distance H1 from the base 5b of the attachment 5 so as to allow stable fixing of the active portions 9 of the utensils 7 and, at the same time, to allow the handles 8 of the utensils 7 to be arranged externally with respect to the attachment 5.

Since the handles 8 of the utensils 7 generally have a thickness greater than that of the active portions 9, that configuration allows stable positioning of the utensils 7 on the magnet 60 to be brought about.

Various desired types of knives or utensils suitable for chopping and/or serving cheeses, cooked meats, bread or other foods present on the chopping board 1 may be fixed to the magnet 60.

In other versions which are not shown, the attachment 5 may be provided with fixing systems 6 which are different from the magnet 60 and are suitable, for example, for also fixing utensils which are provided with an active portion not composed of steel.

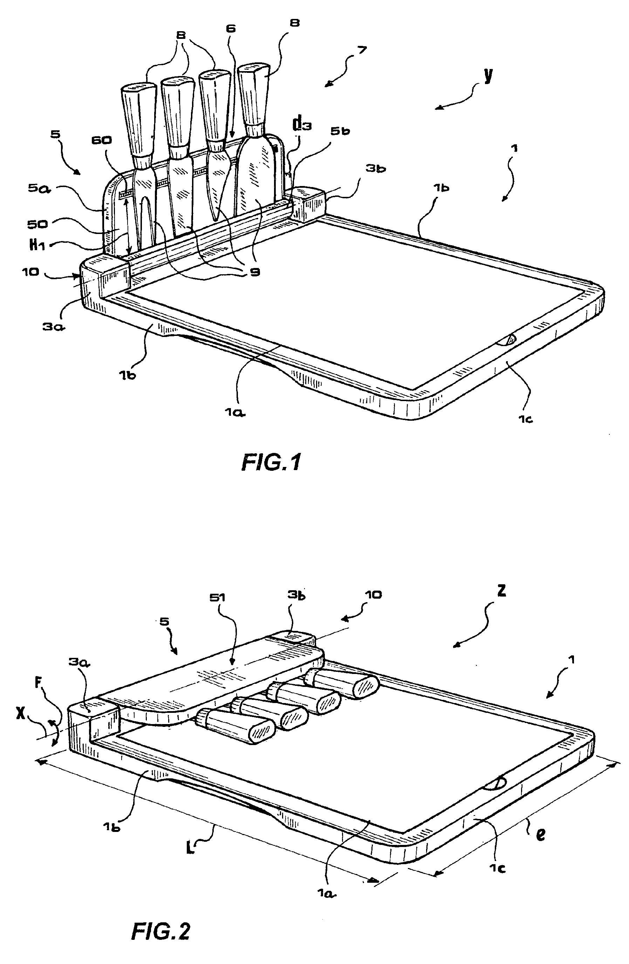

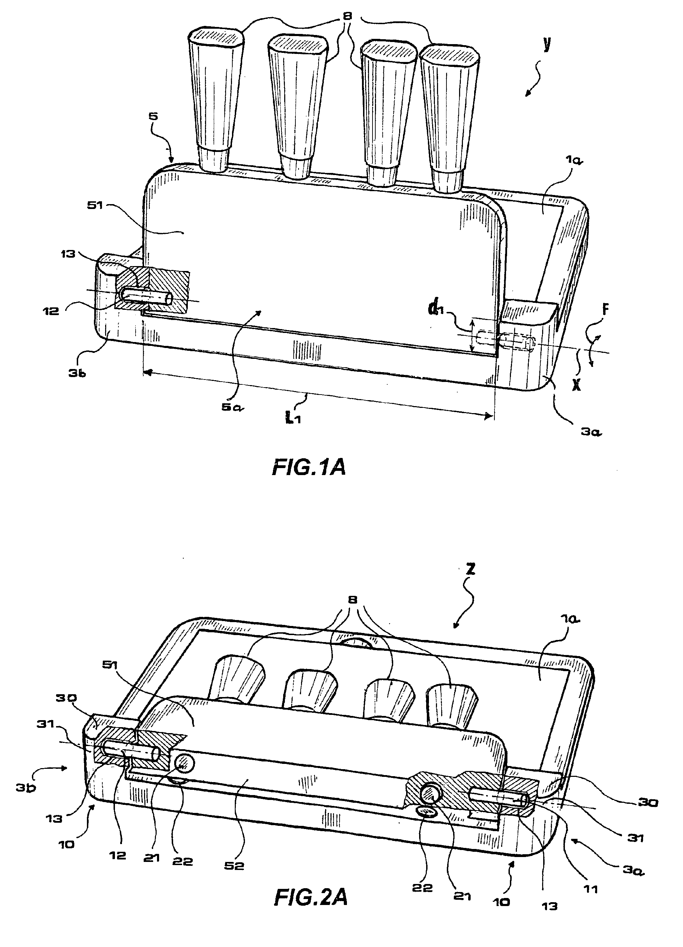

The chopping board 1 is further provided with hinging means 10 in order to hingingly secure the attachment 5 to the chopping board 1 so that the attachment 5 can be rotated, as indicated by the arrow F, about a hinging axis X in order to be moved between a work configuration Y which is shown in Figures 1 and 1a and in which the attachment 5 is provided in a substantially perpendicular direction with respect to the working plane 1a and a rest configuration Z which is shown in Figures 2 and 2a and in which the attachment 5 is provided substantially parallel with respect to the working plane 1a.

In the work configuration Y, a lower base 52 of the base 5b of the attachment is in abutment and parallel with the working plane 1a of the chopping board 1 whilst, in the rest configuration Z, the lower base 52 is provided perpendicularly relative to the working plane 1a and is arranged end to end with the side walls 31 of the two edge elements 3a, 3b.

In the work configuration Y, the external face 51 of the side wall 5a is arranged end to end with the side walls 31 of the two edge elements 3a, 3b whilst, in the rest configuration Z, the external face 51 of the side wall 5a is arranged end to end with, that is to say, at the same height as, the external bases 30 of the two edge elements 3a, 3b.

In that manner, in the rest configuration Z, the attachment 5 and the two edge elements 3a, 3b define a single raised edge which may also constitute a gripping element of the chopping board 1 in order to facilitate handling thereof by a user.

Owing to the hinging means 10, it is possible to rotate the attachment 5 with respect to the working plane 1a of the chopping board so as alternately to make the utensils 7 available to a user (with the attachment 5 in a work configuration Y) and to reduce the total spatial requirement of the chopping board 1 (with the attachment 5 in the rest configuration Z).

As mentioned, since the utensils 7 are positioned on the internal face 50 of the attachment 5, in the work configuration Y the utensils 7 are directed towards the working plane 1a and are therefore readily accessible to the user, whilst, in the rest configuration Z, the utensils 7 are interposed between the working plane 1a and the attachment 5 itself.

This allows, in the rest configuration Z, the active portions 9 of the utensils, in particular the blades of knives, to be protected from accidental blows, at the same time preventing any risk to the users.

In the rest configuration Z, the handles 8 of the utensils 7 are in abutment with the working plane 1a of the chopping board 1.

In the rest configuration Z, the base 5b of the attachment 5 is in abutment with the working plane 1a whilst the internal face 50 of the side wall 5a is spaced apart from the working plane 1a by a distance corresponding to the portion d3 whose base 5b projects with respect to the internal face 50. Therefore, there is defined a space between the internal face 50 and the working plane 1a which allows the handles 8 of the utensils 7 to be accommodated in the rest configuration Z.

The hinging means 10 comprise a first and a second rotation pin 11, 12 which are fixed to the base 5b of the attachment and which are provided to be slidingly received in corresponding seats 13 which are defined in the two edge elements 3a, 3b.

Therefore, the first and the second rotation pin 11, 12 are interposed between the first and the second edge element 3a, 3b, respectively, and the base 5b of the attachment 5 so as to rotatably fix the base 5b of the attachment to the edge elements 3a, 3b.

In other versions, the rotation pins 11, 12 are fixed to two edge elements 3a and 3b and are received in corresponding seats defined in the base 5b of the attachment 5 so as to allow relative rotation between the attachment 5 and the chopping board 1.

In other versions which are not shown, there may be provided hinge type elements which are different from the rotation pins and which are intended to allow relative rotation between the attachment 5 and chopping board 1. The chopping board 1 is further provided with a stabilization device 20 for maintaining the attachment 5 in a stable manner in the work configuration Y in order to prevent accidental movement of the attachment 5 itself from that configuration.

The stabilization device 20 comprises stabilization means and counter-means which co-operate with each other in order to stabilize the attachment 5 in the above-mentioned work configuration Y and which are provided on the attachment 5 and in the working plane 1a, respectively, in positions which are intended to face each other in the work configuration Y.

The stabilization means and counter-means comprise, in the version shown, at least a pair of magnets 21, 22 which are provided in mutually corresponding positions on the lower base 52 of the attachment 5 and in the working plane 1a of the chopping board 1, respectively.

The two magnets 21, 22 of the pair of magnets face each other in the work configuration Y so that the magnetic force generated between them maintains the attachment 5 in a stable manner in the work configuration Y. In order to move the attachment 5 from the above-mentioned work configuration Y, therefore, it is necessary to apply a force greater than the magnetic force developed by the two magnets 21, 22.

Therefore, undesirable and accidental movement of the attachment 5 from the work configuration Y is prevented.

In versions which are not shown, there may be provided other stabilization devices, for example, springs, which generate a force which is resistant to any movement of the attachment 5 from the work configuration Y or fitting type stabilization means and counter-means which are able to become fitted relative to each other in the work configuration Y, or a hook type element which is provided on the attachment 5 (or, vice versa, on the chopping board) and which is intended to be received in an engagement seat which is defined on the chopping board (or, vice versa, on the attachment) in order to lock the attachment 5 in the work configuration Y, or some other type.

In versions which are not shown, the chopping board of the invention may be provided with gripping elements in order to facilitate the handling thereof by a user and/or engagement elements in order to be engaged with a wall by means of a stud, or the like.

In other versions which are not shown, the chopping board of the invention may be provided with support elements for supporting the chopping board in a desired plane in such a manner that the chopping board itself is raised with respect to the support plane. In that manner, the gripping of the chopping board by the users is also facilitated.

Therefore, the present invention solves the problem set out above with reference to the cited prior art, at the same time affording a number of other advantages.

## Claims

1. A chopping board (1) comprising a body defining a working plane (1a) which is intended to receive food to be chopped and/or served, an attachment (5) which is provided with fixing means (6, 60) for a utensil (7) to be used for chopping and/or serving the food present on the chopping board (1), **characterized in that** it comprises hinging means (10, 11, 12) for hingingly securing the attachment (5) to the chopping board (1) in order to rotate the attachment (5) about a hinging axis (X) in order to move it between a work configuration (Y), in which the attachment (5) is provided in a substantially perpendicular direction with respect to the working plane (1a), and a rest configuration (Z), in which the attachment (5) is provided substantially parallel with respect to the working plane (1a).

2. A chopping board (1) according to claim 1 and comprising a first and a second edge element (3a, 3b) which are spaced apart so as to define a seat for receiving the attachment (5), the hinging means (10, 11, 12) comprising at least one rotation pin (11, 12) which is interposed between the attachment (5) and at least one of the first and/or second edge elements (3a, 3b), respectively, the at least one rotation pin (11, 12) being fixed to one of the attachment (5) or the at least one edge element (3a, 3b) and being rotatable with respect to the other of the edge element (3a, 3b) or the attachment (5), respectively, for hinging the attachment (5) with respect to the chopping board (1) in order to allow the attachment (5) to rotate about the hinging axis (X).

3. A chopping board (1) according to any of the preceding claims and further comprising a stabilization device (20, 21, 22) for maintaining the attachment (5) in the work configuration (Y) in a stable manner.

4. A chopping board (1) according to claim 3, wherein the stabilization device comprises stabilization means and counter-means (21, 22) which are provided in the working plane and on the attachment (5), respectively, and which co-operate with each other in order to stabilize the attachment (5) in the work configuration (Y).

5. A chopping board (1) according to claim 3 or 4, wherein the stabilization device comprises at least a pair of magnets (21, 22) which are provided in mutually corresponding positions on the attachment (5) and in the working plane (1a), respectively, so as to face each other in the work configuration (Y), the magnets of the pair of magnets (21, 22) generating a magnetic force so as to maintain the attachment (5) in the work configuration (Y) in a stable manner.

6. A chopping board (1) according to any of the preceding claims, wherein the fixing means (6) comprise a magnet (60) which is intended to receive an active portion (9) of the utensils, which active portion (9) is composed of steel in order to fix the utensils (7) to the attachment (5) in a stable manner.

7. A chopping board (1) according to any of the preceding claims, wherein the fixing means (6) are provided on an internal face (50) of the attachment (5) which is intended to be directed during use towards the working plane of the chopping board.

## Patentansprüche

1. Schneidbrett (1) mit einem Körper, der eine Arbeitsebene (1a) definiert, welche dazu vorgesehen ist, ein zu schneidendes und/oder zu servierendes Lebensmittel aufzunehmen, mit einem Anbauteil (5), das mit einer Befestigungseinrichtung (6, 60) für ein Werkzeug (7) versehen ist, das zum Schneiden und/oder Servieren des Lebensmittels auf dem Schneidbrett (1) vorgesehen ist, **dadurch gekennzeichnet, dass** es eine Gelenkeinrichtung (10, 11, 12) zur schwenkbaren Sicherung des Anbauteils (5) am Schneidbrett (1) aufweist, um das Anbauteil (5) um eine Schwenkachse (X) zu schwenken, um es zwischen einer Arbeitsstellung (Y), in der das Anbauteil (5) mit einer im Wesentlichen senkrechten Ausrichtung bezüglich der Arbeitsebene (1a) vorgesehen ist und einer Lagerstellung (2) zu bewegen, in der das Anbauteil (5) im Wesentlichen parallel bezüglich der Arbeitsebene (1a) angeordnet ist.

2. Schneidbrett (1) nach Anspruch 1, das ein erstes und ein zweites Eckelement (3a, 3b) aufweist, die voneinander beabstandet sind, um einen Sitz für die Aufnahme des Anbauteils (5) zu bilden, wobei die Gelenkeinrichtung (10, 11, 12) zumindest einen Drehstift (11, 12) aufweist, der zwischen dem Anbauteil (5) und jeweils zumindest einem der ersten und/oder zweiten Eckelemente (3a, 3b) vorgesehen ist, wobei der zumindest eine Drehstift (11, 12) entweder am Anbauteil (5) oder zumindest einem der Eckelemente (3a, 3b) befestigt und drehbar bezüglich des jeweils anderen der Eckelemente (3a, 3b) oder dem Anbauteil (5) drehbar ist, um das Anbauteil (5) relativ zum Schneidbrett (1) anzulenken, um dem Anbauteil (5) eine Drehbewegung um die Schwenkachse (X) zu ermöglichen.

3. Schneidbrett (1) nach einem der vorhergehenden Ansprüche, das ferner eine Stabilisationsvorrichtung (20, 21, 22) aufweist, um das Anbauteil (5) in der Arbeitsstellung zu stabilisieren.

4. Schneidbrett (1) nach Anspruch 3, wobei die Stabilisationsvorrichtung eine Stabilisationseinrichtung und eine Gegen-Einrichtung (21, 22) aufweist, die in der Arbeitsebene (1a) bzw. am Anbauteil (5) vorgesehen sind und die miteinander zusammenwirken, um das Anbauteil (5) in der Arbeitsstellung (Y) zu stabilisieren.

5. Schneidbrett (1) nach Anspruch 3 oder 4, wobei die Stabilisationsvorrichtung zumindest ein Paar von Magneten (21, 22) aufweist, die in gegenseitig passenden Stellungen am Anbauteil (5) bzw. in der Arbeitsebene (1a) angeordnet sind, so dass sie in der Arbeitsstellung (Y) einander gegenüber liegen, wobei die Magneten des Paares von Magneten (21, 22) eine magnetische Kraft erzeugen, um das Anbauteil (5) in der Arbeitsstellung (Y) auf stabile Art und Weise zu halten.

6. Schneidbrett (1) nach einem der vorhergehenden Ansprüche, wobei die Befestigungseinrichtungen (6) einen Magneten (60) aufweisen, der dazu dient, einen aktiven Teil (9) der Werkzeuge aufzunehmen, wobei der aktive Teil (9) aus Stahl aufgebaut ist, um die Werkzeuge (7) am Anbauteil (5) in einer stabilen Weise zu fixieren.

7. Schneidbrett (1) nach einem der vorhergehenden Ansprüche, wobei die Befestigungseinrichtungen (6) auf einer Innenfläche (50) des Anbauteils (5) angeordnet sind, die während des Gebrauchs in Richtung auf die Arbeitsebene (1a) des Schneidbretts weist.

## Revendications

1. Planche à découper (1) comprenant un corps définissant un plan de travail qui est prévu pour recevoir de la nourriture à découper et/ou servir, une fixation (5) qui est prévue avec des moyens de fixation (6, 60) pour un ustensile (7) à utiliser pour découper et/ou servir la nourriture présente sur la planche à découper (1), **caractérisée en ce qu'**elle comprend des moyens de charnière (10, 11, 12) pour fixer de manière articulée la fixation (5) à la planche à découper (1) afin de faire tourner la fixation (5) autour d'un axe d'articulation (X) pour la déplacer entre une configuration de travail (Y) dans laquelle la fixation (5) est prévue dans une direction sensiblement perpendiculaire par rapport au plan de travail et une configuration de repos (Z) dans laquelle la fixation (5) est prévue de manière sensiblement parallèle par rapport au plan de travail (1a) .

2. Planche à découper (1) selon la revendication 1 et comprenant un premier et un second élément de bord (3a, 3b) qui sont espacés afin de définir un siège pour recevoir la fixation (5), les moyens de charnière (10, 11, 12) comprenant au moins une broche rotative (11, 12) qui est intercalée entre la fixation (5) et au moins l'un des premier et/ou second éléments de bord (3a, 3b) respectivement, la au moins une broche rotative (11, 12) étant fixée à l'un parmi la fixation (5) ou le au moins un élément de bord (3a, 3b) et pouvant tourner par rapport à l'autre parmi l'élément de bord (3a, 3b) ou la fixation (5) respectivement, pour articuler la fixation (5) par rapport à la planche à découper (1) afin de permettre la rotation de la fixation (5) autour de l'axe d'articulation (X).

3. Planche à découper (1) selon l'une quelconque des revendications précédentes et comprenant en outre un dispositif de stabilisation (20, 21, 22) pour maintenir la fixation (5) dans la configuration de travail (Y) d'une manière stable.

4. Planche à découper (1) selon la revendication 3, dans laquelle le dispositif de stabilisation comprend des moyens et des contre-moyens de stabilisation (21, 22) qui sont prévus dans le plan de travail et sur la fixation (5) respectivement, et qui coopèrent l'un par rapport à l'autre afin de stabiliser la fixation (5) dans la configuration de travail (Y).

5. Planche à découper (1) selon la revendication 3 ou 4, dans laquelle le dispositif de stabilisation comprend au moins une paire d'aimants (21, 22) qui sont prévus dans des positions mutuellement correspondantes sur la fixation (5) et dans le plan de travail respectivement, afin de se faire face dans la configuration de travail (Y), les aimants de la paire d'aimants (21, 22) générant une force magnétique afin de maintenir la fixation (5) dans la configuration de travail (Y) d'une manière stable.

6. Planche à découper (1) selon l'une quelconque des revendications précédentes, dans laquelle les moyens de fixation (6) comprennent un aimant (60) qui est prévu pour recevoir une partie active (9) des ustensiles, laquelle partie active (9) est composée d'acier afin de fixer les ustensiles (7) sur la fixation (5) d'une manière stable.

7. Planche à découper (1) selon l'une quelconque des revendications précédentes, dans laquelle les moyens de fixation (6) sont prévus sur une face interne (50) de la fixation (5) qui est prévue pour être dirigée pendant l'utilisation, vers le plan de travail de la planche à découper.
